# EUROPEAN PATENT APPLICATION

(11) **EP 2 505 964 A2**
(43) Date of publication of application: **03.10.2012**
(21) Application number: 12159947.6
(22) Date of filing: 16.03.2012
(51) Int. Cl.: G01C 21/36

(54) **Movement guidance display system, movement guidance display method, and computer program**

(30) Priority: 31.03.2011 JP 2011079082
(71) Applicant: Aisin AW Co., Ltd., Anjo-shi, Aichi 444-1192 (JP)
(72) Inventor: Adachi, Kazuhide, Anjo-shi, Aichi-ken 444-1192 (JP); Koyama, Ryoji, Anjo-shi, Aichi-ken 444-1192 (JP)
(74) Representative: Desormiere, Pierre-Louis

(57) **Abstract**

If a vehicle is traveling in a shielded space shielded by shielding members and the shielded space is target for display in a 3D travel screen, a 3D travel screen (60), in which the shielded space where the vehicle is currently traveling is displayed in a 3DCG image with a viewpoint from inside of the shielded space, is displayed on a liquid crystal display (15). In addition, in the 3D travel screen (60), shape determining objects (for example, lights (68), curbs (69),) determining a shape of the shielded space are displayed superimposed on the shielding members.

## Description

### BACKGROUND OF THE INVENTION

### 1. Field of the invention

The present invention relates to a movement guidance display system, a movement guidance display method, and a computer program that display an image to provide guidance for a movement of a movable body.

### 2. Description of the Related Art

Recently, many vehicles are mounted with navigation devices that are capable of guiding a driver to easily arrive at a desired destination by providing travel guidance of the vehicles. Here, the navigation devices are devices that detect a current position of the vehicle via a GPS receiver or the like, acquire map data corresponding to the current position through a recording medium such as a DVD-ROM, a HDD, and the like, or a network, and display the current position of the vehicle, road shapes in the vicinity of the current position, and the like on a display device. In addition, in recent years, some cellular phones, PDAs (Personal Digital Assistant), personal computers, and the like have the same function as the above-mentioned navigation devices. Further, besides the vehicles, the above-mentioned guidance can be provided to pedestrians or two wheels.

In addition, in recent years, for the above-mentioned navigation devices and the like, a technology is being proposed, which displays the current position of the vehicle and the road shapes in the vicinity of the current, position in a user-friendly manner in a case in which the vehicle travels along a road difficult to display in a normal map image such as a tunnel, an underground road, or the like. For example, Japanese Patent Application; Publication No. JP-A-2005-195475 proposes a technology to translucently display an underground structure such as a tunnel and the like when displaying the map image of the vicinity of the vehicle. In addition, Japanese Patent Application; Publication No. JP-A-2005-315851 proposes a technology to translucently display an elevated highway on a higher level if the vehicle travels along to general road on a lower level when displaying a road section where the general road and the elevated highway are structured one above the other.

### SUMMARY OF THE INVENTION

However, only by translucently displaying shielding members (which corresponds to ceilings and sidewalls in Japanese Patent Application; publication No. JP-A-2005-195475 and elevated roads in Japanese Patent Application; Publication No. JP-A-2005-315851) shielding a space where the vehicle travels, as the above-mentioned Japanese Patent Application; Publication No. JP-A-2005-195475 and Japanese Patent Application; Publication No. JP-A-2005-315851, it was difficult to make the user accurately recognize the shape of the space shielded by the shielding members, i.e., the space shape of the travelling space where the vehicle travels, in the map image displayed on the display device. As a result, the user cannot accurately determine the current position of the vehicle from the map image displayed on the display device, and also it is difficult to recognize the road shape ahead of the vehicle in relation to the travel direction.

In order to solve the above-mentioned problems, it is an object of the present intention to provide a movement guidance display system, a movement guidance display method, and a computer program that, if a movable body is located in a shielded space shielded by shielding members, enables the user to accurately recognize the space shape of the shielded space in the image displayed on the display device and also enables the user to accurately determine the current position of the movable body as well as easily recognize the road shape ahead of the movable body in relation to the travel direction.

### [cleans for Solving the Problem]

To achieve the forementioned object, the present intention provides a movement guidance display system according to a first aspect of the present invention, including: an image display unit that, if a movable body is located in a shielded space shielded by shielding members, displays on a display device a vicinity image showing a vicinity environment outside the shielded space by translucently displaying the shielding members with a viewpoint, from inside of the shielded space; and a shape determining object display unit that displays shape determining objects determining a shape of the shielded space by superimposing on the shielding members in the vicinity image.
Note that the "movable body" includes pedestrians and two wheels as well as vehicle.
In addition, "a shielded space shielded by shielding members" may be a state where the shielded space is totally shielded by the shielding members, or the shielded space is partly (for example, only upper side or lateral side) shielded by the shielding members.
In addition, "an image display unit" may be configured as below. For example, it may be "an image display unit that, if a movable body moves in a road space surrounded by shielding members, displays on a display device a vicinity image showing a vicinity environment of the movable body by translucently displaying the shielding members with a viewpoint from inside of the road space". In addition, it may be "an image display unit that, if at least a part of a view of a movable body is shielded by an object located in the vicinity of a road, displays on a display device a vicinity image showing a vicinity environment of the movable body by translucently displaying the object with a viewpoint from inside of the road".
In addition, "system" may be composed of a single device or realized by a plurality of devices transmitting and receiving information.

In the movement guidance display system according to a second aspect of the present invention, in the movement guidance display system described in the first aspect of the present invention, the image display unit, if the movable body (63) is located on a road inside a tunnel, displays on the display device the vicinity image showing a vicinity environment outside the tunnel by translucently displaying walls of the tunnel serving as the shielding members with a viewpoint from the road inside the tunnel, and the shape determining object, display unit displays the shape determining objects determining a cross-section shape of internal walls of the tunnel in a width direction of the road by superimposing on the walls of the tunnel in the vicinity image.

In the movement guidance display system according to a third aspect of the present invention, in the movement guidance display system described in the first or second aspect of the present invention, wherein the shape determining object display unit displays lighting fixtures as the shape determining objects.

In the movement guidance display system according to a fourth aspect of the present invention, in the movement, guidance display system described in the third aspect of the present invention, wherein the shape determining object display unit displays the lighting fixtures of a shape fitting to an internal shape of the shielding members.

In the movement guidance display system according to a fifth aspect, of the present invention, in the movement guidance display system described in any one of the first to fourth aspect of the present invention, wherein the shape determining object display unit displays the shape determining objects at predetermined intervals along a moving direction of the movable body.

The movement guidance display system according to a sixth aspect of the present invention, in the movement guidance display system described in the fifth aspect of the present invention, includes a movable body speed acquiring unit that acquires a moving speed of the movable body, wherein the shape determining object display unit, if the moving speed of the movable body is equal to or more than a predetermined speed, displays the shape determining objects at shorter allocating intervals compared to if the moving speed of the movable body is less than the predetermined speed.

The movement guidance display system according to a seventh aspect of the present invention, in the movement guidance display system described in the sixth aspect of the present invention, includes a designated highest speed acquiring unit that acquires a designated highest speed set to a road where the movable body is located, wherein the predetermined speed is the designated highest speed acquired by the designated highest speed acquiring unit.

In the movement guidance display system according to an eighth aspect of the present invention, in the movement guidance display system described in any one of the first to seventh aspects of the present invention, wherein the shape determining object display unit displays curbs as the shape determining objects.

In the movement guidance display system according to a ninth aspect of the present invention, in the movement guidance display system described in any one of the first to eighth aspects of the present invention, wherein the image display unit, if the shielding members are displayed superimposed, displays the shielding members being located further with respect to the viewpoint at lower transmittance.

The movement guidance display system according to a tenth aspect of the present invention, in the movement guidance display system described in any one of the first to ninth aspects of the present invention, includes: a facility information acquiring unit that acquires facility information regarding a facility; and a facility display unit that displays a facility exterior appearance image determining an exterior shape of the facility, which is located within a display target area in the vicinity image, at a display position corresponding to a positional coordinate of the facility based on the facility information acquired by the facility information acquiring unit, wherein the facility display unit does not display the facility exterior appearance image showing a facility other than specific facilities or displays the facility exterior appearance image showing the facility other than the specific facilities at higher transmittance compared to the facility exterior appearance images showing the specific facilities.

A movement guidance display method according to an eleventh aspect of the present invention, includes the steps of: displaying, if a movable body is located in a shielded space shielded by shielding members, on a display device a vicinity image showing a vicinity environment outside the shielded space by translucently displaying the shielding members with a viewpoint from inside of the shielded space; and displaying shape determining objects determining a shape of the shielded space by superimposing on the shielding members in the vicinity image.

A computer program according to a twelfth aspect of the present invention, which is installed in a computer, causes a processor to execute the functions of: displaying, if a movable body is located in a shielded space shielded by shielding members, on a display device a vicinity image showing a vicinity environment outside the shielded space by translucently the shielding members with a viewpoint from inside of the shielded space; and displaying shape determining objects determining a shape of the shielded space by superimposing on the shielding members in the vicinity image.

According to the movement guidance display system having the above-mentioned configuration described in the first aspect of the present invention, if the movable body is located in the shielded space shielded by the shielding members, it is possible to make the user accurately recognize the space shape of the shielded space in the image displayed on the display device. As a result, it is possible to make the user accurately determine the current position, of the movable body as well as easily recognize the vicinity environment (the road shape, the features in the vicinity, and the like) outside the shielded space, which cannot be viewed because of the shielding members.

In addition, according to the movement guidance display system described in the second aspect of the present invention, if the movable body is located in a tunnel, it is possible to make the user accurately recognize the space shape including the cross section of the tunnel in the image displayed on the display device. As a result, it is possible to make the user accurately determine the current position of the movable body as well as easily recognize the vicinity environment (the road shape, the features in the vicinity, and the like) outside the tunnel, which cannot be viewed because of the walls of the tunnel.

In addition, according to the movement guidance display system described in the third aspect of the present invention, the lighting fixtures are displayed as the shape determining objects. Therefore, it is possible to make the user easily recognize especially the shape of the walls such as ceilings, sidewalls, and the like in the vicinity of the movable body in the shielded space. Also, because the lighting fixtures exist a lot in the real world, it is possible to display the vicinity image, which does not give the user an uncomfortable feeling.

In addition, according to the movement guidance display system described in the forth aspect of the present invention, the lighting fixtures of a shape fitting the internal shape of the shielding members are displayed as the shape determining objects. Therefore, it is possible to make the user easily recognize the shape of the shielding members forming the shielded space. Consequently, if the shielding members have complicated shapes, it is possible to make the user accurately recognize the shape of the shielded space without giving the user an uncomfortably feeling.

In addition, according to the i»ovement guidance display system described in the fifth aspect of the present invention, the shape determining objects are displayed at the predetermined intervals along the moving direction of the movable body. Therefore, if the space shape of the shielded space has a complicated shape, it is possible to make the user accurately recognize the shape of the shielded space along the moving direction of the movable body because of the shape determining objects.

In addition, according to the movement guidance display system described in the sixth aspect of the present invention, if the moving speed of the movable body is equal to or more than the predetermined speed, the shape determining objects are displayed at shorter allocating intervals compared to if the moving speed of the movable body is less than the predetermined speed. Therefore, if the movable body travels at the predetermined speed or more, it is possible to increase the number of shape determining objects disappearing from the screen per unit of time. Consequently, it is possible to make the user strongly recognize that the movable body is traveling at high speed, which can suppress the movable body traveling at the predetermined speed or more

In addition, according to the movement guidance display system described in the seventh aspect of the present invention, if the moving speed of the movable body is equal to or more than the designated highest speed set to the road, the shape determining objects are displayed at shorter allocating intervals compared to if the moving speed of the movable body is less than the designated highest speed. Therefore, it is possible to suppress the movable body traveling at speed equal to or more than especially the designated highest, speed set to the road.

In addition, according to the movement guidance display system described in the eighth aspect of the present invention, the curbs are displayed as the shape determining objects, Therefore, it is possible to make the user easily recognize especially the shape of the road surface, where the movable body moves, in the shielded space. Also, because the curbs exist a lot in the real world, it is possible to display the vicinity image that does not give the user an uncomfortable feeling.

In addition, according to the movement guidance display system described in the ninth aspect of the present invention, if the shielding members are displayed superimposed, the shielding members being located further with respect to the viewpoint are displayed at lower transmittance. Therefore, if the shielded space have a complicated shape, it is possible to display the positional relation of the shielding members in an easily-recognizable manner, which makes it possible to display the shape of the shielded space in an easily-determinable manner.

In addition, according to the movement guidance display system described in the tenth aspect of the present invention, the facility exterior appearance images that determine the exterior appearance shapes of the facilities located within the display target area are displayed at the display positions corresponding to the positional coordinates of the facilities. Therefore, even in the vicinity image displayed with the viewpoint from the inside of the shielded space, it is possible to make the user recognize what kinds of facilities are located in the vicinity area or the movable body, which is shielded by the shielding members. In addition, the facility exterior appearance images showing facilities other than specific facilities are not displayed or displayed at higher transmittance compared to the facility exterior appearance images showing the specific facilities. Therefore, even if a plurality of facilities exist, it is possible to make the user easily view facilities important for the user, which makes it possible to facilitate the user accurately recognizing the position of the movable body.

According to the movement guidance display method described in the eleventh aspect of the present invention, if the movable body is located in the shielded space shielded by the shielding members, it is possible to make the user accurately recognize the space shape of the shielded space in the image displayed on the display device. As a result, it is possible to make the user accurately determine the current position of the movable body as well as easily recognize the vicinity environment (the road shape, the features in the vicinity, and the like) outside the shielded space, which cannot be viewed because of the shielding members.

Further, according to the computer program described in the twelfth aspect of the present invention, if the movable body is located in the shielded space shielded by the shielding members, it is possible to make the user accurately recognize the space shape of the shielded space on the image displayed on the display device. As a result, it is possible to make the user accurately determine the current position of the movable body as well as easily recognize the vicinity environment (the road shape, the features in the vicinity, and the like) outside the shielded space, which cannot be viewed because of the shielding members.

### BRIEF DESCRITION OF THE DRAWINGS

FIG. 1 is a block diagram showing a navigation device according to an embodiment.

FIG. 2 shows a travel guidance screen displayed on a liquid crystal display.

FIG. 3 shows a 3D travel screen displayed on the liquid crystal display.

FIG. 4 shows a 3D travel screen displayed on the liquid crystal display.

FIG. 5 shows a vehicle located in a shielded space.

FIG. 6 shows an enlarged image of shape determining objects displayed in the 3D travel screen.

FIG. 7 is a flow chart of an image display control processing program according to the embodiment.

### DETAILED DESCRIPTION OF THE PREFERRED EMBODIMENT

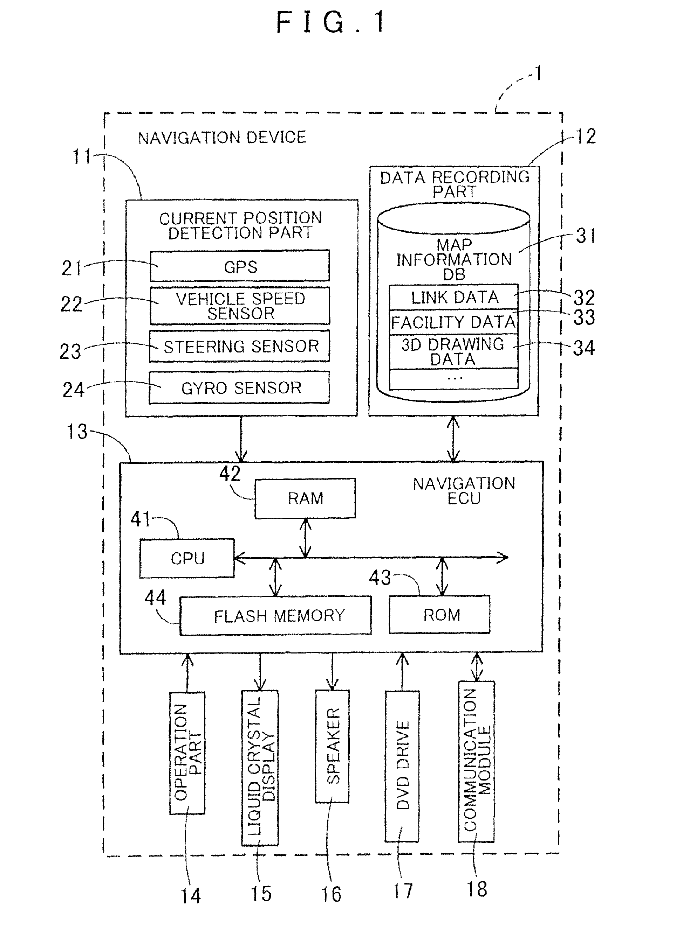

Hereinafter, a specific embodiment of a movement guidance display system according to the present intention that is implemented in a navigation device will be explained in detail with reference to the drawings. First, a schematic structure of a navigation device 1 according to the present embodiment will be explained with reference to FIG. 1. FIG. 1 is a block diagram showing the navigation device 1 according to the present embodiment.

As shown in FIG. 1. the navigation device 1 according to the present embodiment is composed of: a current position detection part 1 that detects a current position of a vehicle mounted with the navigation device 1; a data recording part 12 in which various kinds of data is recorded; a navigation ECU 13 that performs various kinds of arithmetic processing based on input information; an operation part 14 that accepts an operation of a user; a liquid crystal display 15 that displays a map image of the vicinity of the vehicle, a 3D travel screen, which is described later, and the like, to the user; a speaker 16 that outputs audio guidance regarding route guidance; a DVD drive 17 that reads out a DVD serving as a storage medium; a communication module 18 that performs communication with information enters such as a probe center, a VICS (a registered trademark: Vehicle Information and Communication System) center, and the like.

Hereinafter, the respective components composing the navigation device 1 are explained.
The current position detection part 11 includes at least one of a GPS 21, a vehicle speed sensor 22, a steering sensor 23, a gyro sensor 24, and the like, and can detect a current position and a bearing of the vehicle, a traveling speed of the vehicle, a current time, and the like. Here, in particular, the vehicle speed sensor 22 is a sensor for detecting a moving distance and it speed of the vehicle, generates pulses in accordance with a rotation of drive wheels of the vehicle, and outputs pulse signals to the navigation ECU 13. Subsequently, by counting the number of generated pulses, the navigation ECU 13 calculates a rotation speed of the drive wheels and the moving distance. Note that the navigation device 1 is not required to be provided with all the aforementioned four kinds of sensors, and the navigation device 1 may be provided with only one or a plurality of kinds of sensors among them.

The data recording part 12 is provided with a hard disk (not shown) serving as an external storage device and a recording medium, and a recording head (not shown) serving as a driver for reading a map information DB 31, a predetermined program, and the like, which are recorded in the hard disk, and writhing predetermined data in the hard disk. The data recording part 12 may be composed of a memory card, or an optical disk such as a CD, a DVD, and the like, in place of the hard disk.

The map information DB 31 is a storage unit storing, for example, link data 32 regarding roads (links), node data regarding node points, facility data 33 regarding facilities, map display data for displaying a map, 3D drawing data 34 for drawing a 3D travel screen, intersection data regarding intersections, route search data for searching for routes, point search data for searching for points, and the like. The 3D travel screen is a screen displayed on the liquid crystal display 15 if the vehicle travels in a traveling space: shielded by shielding members (for example, inside a tunnel, a road under an elevated road, and the like), in which a vicinity image showing a vicinity environment of the vehicle is displayed with a 3-dimensional computer graphics (3DCG) image by translucently displaying the shielding members with a viewpoint from the inside of the traveling space. The details of the 3D travel screen are described later.

As the link data 32, for example, a link ID identifying the link, terminal points node information determining nodes located at the terminal points of the link, the road type of the road structured by the link, a designated highest speed set to the road structure by the link, and the like are stored. In addition, the link data 32 also stores information determining wether the link is a link structuring a traveling space (hereinafter, referred to as "shielded space") shielded by the shielding members. The extent to which the shielded space is shielded by the shielding members may be all around the traveling space, or partial (for example, only the upper side or only the lateral snide). The shielding members include, for example, sound isolating walls, elevated road, woods, ceilings, sidewalls, and the like. In addition, the shielded space shielded by the shielding members may be, for example, a tunnel (including a mountain tunnel, an urban tunnel, an underwater tunnel), a highway with sound isolating walls, a general road located under an elevated road, or the like.

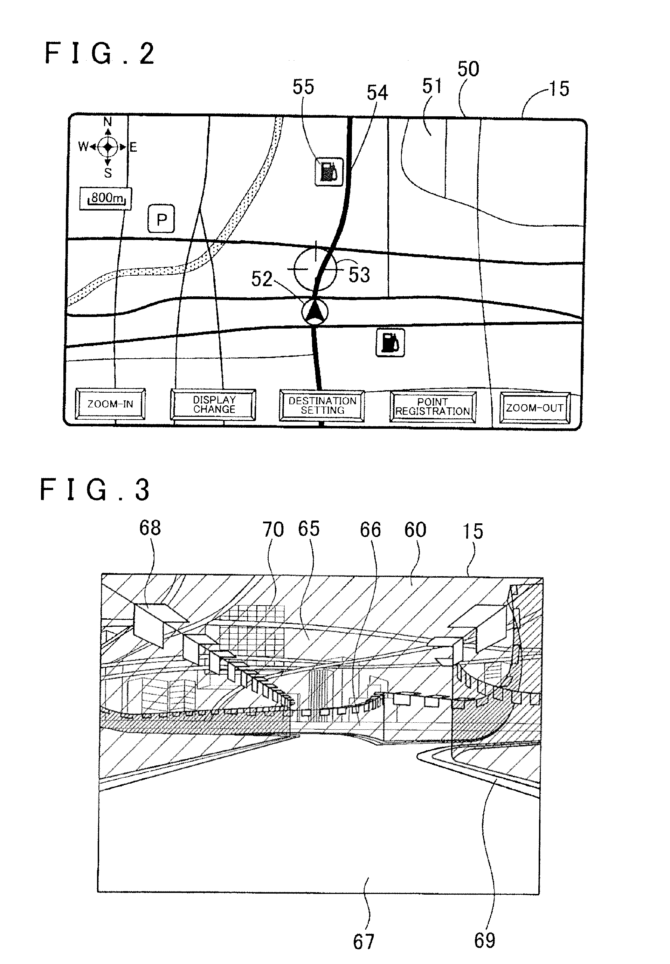

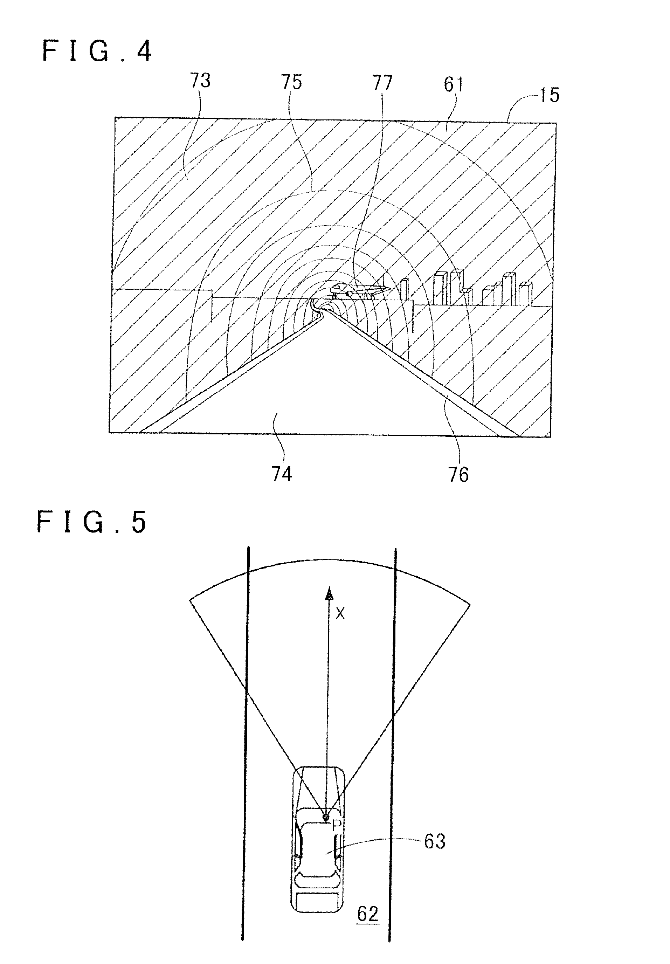

As the facility data 33, information regarding facilities that can serve as departure points, destination, guidance targets in the navigation device 1 is stored. In addition, the information stored as the facility data 33 includes a name of each facility, a positional coordinate, a genre, and the like. On the map image displayed on the liquid crystal display 15, as described later, POI icons are displayed as point information of the facilities at the positions corresponding to the positional coordinates of the facilities stored as the facility data 33 (refer to FIG. 2). The POI icon is a mark representing a type of the facility such as a parking lot, a gas station, a restaurant, a convenience store, or the like. On the other hand, when the 3D travel screen is displayed on the liquid crystal display 15, as described later, facility exterior appearance images in 3D that determine exterior shapes of the facilities are displayed at the positions corresponding to the positional coordinates of the facilities stored as the facility data 33 (refer to FIGS 3 and 4).

As the 3D drawing data 34, various kinds of information used for drawling the 3D travel screen (refer to FIGS. all and 4), which is described later, is stored. Specifically, information necessary for executing processing to create 3DCG such as modeling, scene layout, setting, and rendering, texture images to paste on the created 3DCG mode, and the like are stored. In addition, the 3D drawing data 34 requires different kinds of information depending on the shape and the appearance of the shielded space that is target for drawing. Consequently, the above-mentioned information necessary to display the 3D travel screen is stored for each shielded space that is target for display in the 3D travel screen among a plurality of shielded spaces in all over the country. The shielded space that is target for display in the 3D travel screen corresponds to, for example, a shielded space with heavy traffic, a shielded space with a long travel distance, and the like.

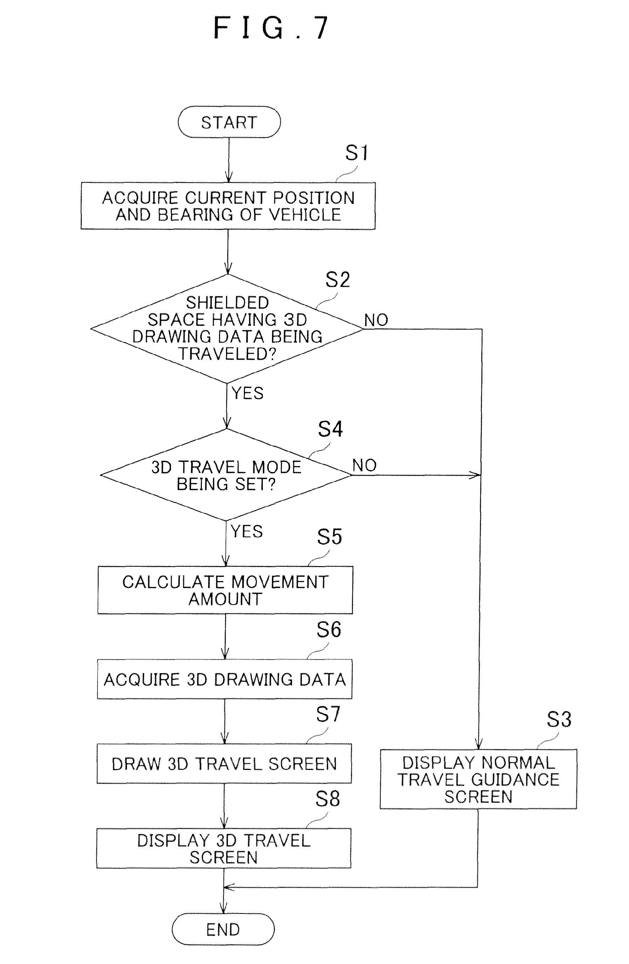

On the other hand, the navigation ECU (electric control unit) 13 is an electronic control unit that performs overall control of the navigation device 1. the navigation ECU 13 is provided withe a CPU 41 serving as a computing device and a control device; internal storage devices such as a RAM 42 used as a corking memory when the CPU 41 executes various computing processing and in which route data when the route has been searched, and the like, are stored, a ROM 43 which record a program for control, and all image display control processing program described later (refer to FIG. 7), and a flash memory 44 which records a program read from the ROM 43; and the like. In addition, the navigation ECU 13 function as various kinds of units serving as processing algorithms. For example, a guidance route setting unit sets a guidance route from a departure point (for example, a current position of a vehicle) to a destination. A movable body position acquiring unit acquires a position of the vehicle (a movable body). An image display unit, if a vehicle is located in a shielded space shielded by shielding members, displays on a display device a vicinity image showing a vicinity environment outside the shielded space by translucently displaying the shielding members with a viewpoint from the inside of the shielded space. A shape determining object display unit displays shape determining objects (for example, lighting fixtures and curbs) determining a shape of the shielded space by superimposing on the shielding members in the vicinity image. A movable body speed acquiring unit acquires a travel speed of the vehicle. A designated highest speed acquiring unit acquires a designated highest speed set to the road where the vehicle is located. A facility information acquiring unit acquires facility information regarding a facility. A facility display unit displays a facility exterior appearance image determining an exterior shape of the facility located within a display target area in the vicinity image at a display position corresponding to a positional coordinate all the facility, based on the acquired facility information.

The operation part 14 is operated for inputting a departure point as a travel stating point or a destination as a travel ending point, and is composed of carious keys and a plurality of operation switches (not shown) such as burtons and the like. In addition, in the present embodiment, the operation part. 14 is utilized to switch a mode set in the navigation device 1 between a "normal mode" and a "3D travel mode". In the navigation device 1 according to the prevent embodiment, a 3D travel screen is displayed on the liquid crystal display 15 as described below, provided that the vehicle is traveling in the shielded space that is target for display in the 3D travel screen and the mode is set to the "3D travel mode". The navigation ECU 13 performs control so as to execute the corresponding kinds of operation based on switch signals outputted through pressing the respective switches and the like. The operation part 14 may be composed of a touch panel installed in font of the liquid crystal display 15. The operation part 14 may be composed of a microphone and a voice recognition device.

In addition, on the liquid crystal display 15, a map image including road network, a 3D travel screen, POI icons, traffic information, operation guidance, an operation menu, key guidance, a guidance route from the departure point to the destination, guidance information along the guidance route, news, wether forecast, time, as mail, television programs, and the like are displayed. Here, in the navigation device 1 according to the present embodiment, a normal travel guidance screen showing a map image of the vicinity of the current position is displayed on the liquid crystal display 15 if the vehicle travels in a space other than the shielded spaces that are target for display in the 3D travel screen, or if the vehicle travels in a shielded space that is target for display in the 3D travel screen but the mode is set to the "normal mode". On the other hand, if the vehicle travels in a shielded space that is target for display in the 3D travel screen and the mode is set to the "3D travel mode", the 3D travel screen in which the vicinity image showing the vicinity environment of the vehicle is displayed in a 3DCG image by translucently displaying the shielding members with a viewpoint from the inside of the shielded space. The travel guidance screen and the 3D travel screen are described in detail later.

The speaker 16 outputs audio guidance for traveling the guidance route based on an instruction from the navigation ECU 13, and the traffic information. In addition, the speaker 16 is utilized to output information regarding facilities retrieved by a facility search.

The DVD drive 17 is a drive capable of reading data stored in the recording medium such as a DVD, a CD, and the like. The DVD drive 17 plays music and images, updates the map information. DB 31 based on the read data, and the like. In place of the DVD drive 17, a HDD and/or a memory card reader may be provided.

The communication nodule 18 is a communication device for receiving the traffic information including congestion information, regulation information, traffic accident information, and the like, which is transmitted from a traffic information center such as to VICS center, a probe center, and the like. The communication module 18 corresponds to a cellular phone and a DCM for example.

Next, the travel guidance screen and the 3D travel screen to be displayed on the liquid crystal display 15 are explained with reference to FIGS. 2 to 4. FIG. 2 shows an example of a normal travel guidance screen to be displayed on the liquid crystal display 15 while the vehicle is traveling. FIGS. 3 and 4 show examples of the 3D travel screen to be displayed on the liquid crystal display 15 while the vehicle is traveling.

As shown in FIG. 2, in a travel guidance screen 50 to be displayed on the liquid crystal display 15, a map image 5 of the vicinity of the current position of the vehicle, a host vehicle position mark 52 indicating the current position of the vehicle matched on the map, a center cursor 53 determining a center position of a display area of the map, a guidance route (that is displayed only when the guidance route is being set) 54 being set on the navigation device 1, and POI icons 55 indicating positions and categories of facilities (a parking lot, a gas station, a restaurant, a convenience store, and the like) are displayed. In addition, while the travel guidance screen 50 is displayed, if the current position of the vehicle displaces, the display target area of the map image 51 changes along with the displacement, and the map image 51 displayed on the travel guidance screen 50 is scrolled and displayed. The user is able to recognize the current position of the vehicle and facility information and road shapes (including the guidance route if the guidance route is being set) of the vicinity of the current vehicle position by referring to the travel guidance screen 50.

In addition, as shown in FIGS. 3 and 4, in the 3D travel screen 60, 61 to be displayed on the liquid crystal display 15, the shielded space where the vehicle is currently traveling is displayed in the 3DGG image with a viewpoint from the inside of the shielded space. The viewpoint of the 3D travel screen 60, 61 is preferably a position of a driver of the vehicle or a center of the vehicle and an eye direction is preferably forward in relation to a travel direction. For example, if a vehicle 63 is located inside a shielded space 62 as shown in FIG. 5, it is referable that the 3D travel screen having the viewpoint at a point P and the eye direction in a direction X is displayed. When the current position and/or bearing of the vehicle change, the 3D travel screen 60, 61 to be displayed on the liquid crystal display 15 also chance along with such change. Specifically, the current position and the bearing of the vehicle are detected at predetermined intervals (for example, 0.2 sec), and a frame of the 3D travel screen 60. 61 is drawn based on the detected current position and bearing of the vehicle.

Here, FIG. 3 shows the 3D travel screen 60 to be displayed if the vehicle travels in an urban tunnel as the shielded space, which passes under buildings. In the 3D travel screen 60 shown in FIG. 3, the shielded space is a space surrounded by walls (ceilings 65, sidewalls 66, and road surfaces 67) of the urban tunnel. The ceilings 65 and the sidewalls 66 serving as the shielding members shielding the shielded space are translucently displayed (except lights 68 and curbs 69 which are described later). In addition, when the ceilings 65 and the sidewalls 66 serving as the shielding members are displayed superimposed, the shielding members located further with respect to the viewpoint are displayed at lower transmittance. Specifically, as shown in FIG. 3, if the sidewalls 66 serving as the shielding members are displayed trlplv-suporlitiposed in the 3D travel screen 60, the sidewalls 66 located closest with respect to the viewpoint, are displayed at the highest t.ransmittance and the sidewalls 66 located furthest, with respect to the viewpoint are displayed at the lowest transmittance. Thereby, even if the shielded space has a complicated shape, it is possible to display the shape of the shielded space in a manner easy for the user to determine.

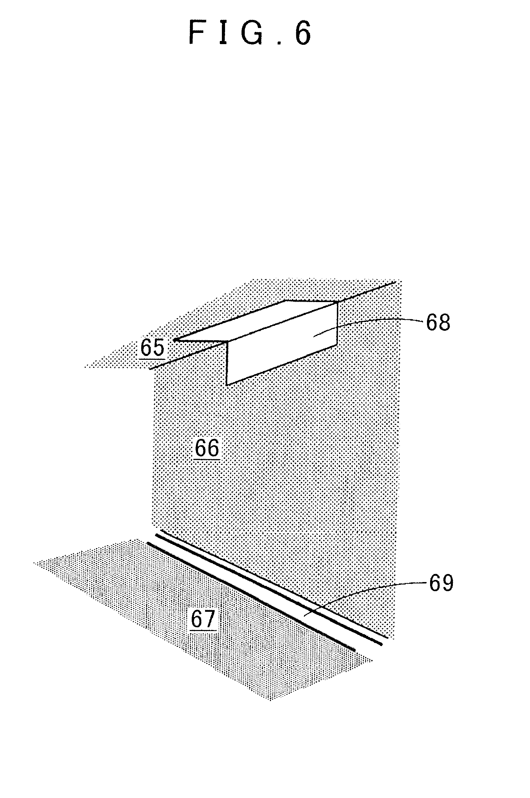

In addition, in the 3D travel screen 60 shown in FIG. 3, in order to assist the user in determining the shape of the urban tunnel as the shielded space, the shape determining objects are displayed on the walls of the tunnel. Specifically, in the example shown in FIG. 3, the lights 68, the curbs 69, and the like are displayed as the shape determining objects by superimposing on the ceilings 65 or the like. Here, FIG. 6 shows an enlarged image of a lighting fixture (a light 68) and a curb 69 in the 3D travel screen 60 shown in FIG. 3. As shown in FIGS. 3 and 6, the lights 68 are displayed across the ceilings 65 and the sidewalls 66 at the border between the ceilings 65 and the sidewalls 66. Further, the lights 68 are L-shaped along the internal shape of the ceilings 65 and the sidewalls 66. In addition, the lights 68 are displayed along a length direction of the road (i.e., the travel direction of the vehicle) at predetermined intervals. On the other hand, as shown in FIGS. 3 and 6, the curbs 69 are displayed along the border between the sidewalls 66 and the road surfaces 67. The displayed shape determining objects determine a cross-section shape (a rectangular shape in the example shown in FIG. 3) of the internal walls of the urban tunnel in a width direction of the road.
Thereby, the user is able to clearly recognize the border between the ceilings 65 and the sidewalls 66 by viewing the lights 68 displayed in the 3D travel screen 60. On the other hand, the user is able to clearly recognize the border (i.e., the shape of the road surfaces 67) between the sidewalls 66 and the road surfaces 67 by viewing the displayed curbs 69. As a result, even if the urban tunnel has a complicated shape, it is possible to easily determine the space shape including the cross section shape of the urban tunnel because of the lights 68 and the curbs 69. In addition, it is possible to easily determine the road shape and the like ahead of the vehicle in relation to the travel direction.

In addition, the navigation device 1 according to the present embodiment, if the travel speed of the vehicle is equal to or more than a predetermined speed (for example, the designated highest speed set to the road where the vehicle is traveling), the lights 68 to be displayed at the predetermined intervals along the length direction of the road (i.e., the travel direction of the vehicle.) are displayed at shorter allocating intervals compared to if the travel speed of the vehicle is less than the predetermined speed (for example, the allocating intervals are set to one halt). Because of this configuration, if the vehicle travels at the predetermined speed or more, the number of lights 68 disappearing from the screen per unit of time increases. Consequently, it is possible to make the user strongly recognize that the vehicle is traveling at high speed, which can suppress the vehicle traveling at the predetermined speed or more.

In addition, in the 3D travel screen 60 shown in FIG. 3, for the facilities located outside a shielded area but within the display target area, facility exterior appearance images 70 in 3DCG determining the exterior shapes of the facilities are displayed. The user is able to view the facility exterior appearance images 70 on the ground through the translucently-displayed ceilings 65 and sidewalls 66. In addition, the facility exterior appearance images 70 are displayed at display positions corresponding to the positional coordinates of the facilities based on the facility data 33 stored in the map information DB 31. Consequently, the user is able to recognize what kinds of facilities are located in the vicinity area of the vehicle shielded by the shielding members, by viewing the 3D travel screen 60. In addition, it is preferable that the facility exterior appearance images 70 are not displayed for all facilities, and the facility exterior appearance images showing facilities other than specific facilities are not displayed or displayed at higher transmittance compared to the facility exterior appearance images showing the specific facilities. Here, the specific facilities are preferably, for example, well-known facilities (notable sites, stations, airports, and the like), facilities serving as landmarks when traveling (buildings with characteristic shapes such as towers, specific tall buildings, and the like), facilities where the user frequently visits, and the like.

On the other hand, FIG. 4 shows a 3D travel screen 61 displayed if the vehicle travels along an underwater tunnel passing under a sea or a river as the shielded space. In the 3D travel screen 61 shown in FIG. 4, the shielded space is a space surrounded by the walls (curved walls 73 having U-shaped cross section, which combines the ceilings and the sidewalls, and road surfaces 74) of the underwater tunnel. The curved walls 73 serving as the shielding members shielding the shielded space are translucently displayed (except compartment lines 75 and curbs 76, which are described later). In addition, if the curved walls 73 serving as the shielding members are displayed superimposed, the shielding members located further with respect to the viewpoint are displayed at lower transmittance, in the same manner as the 3D travel screen 60 shown in FIG. 3.

In addition, in the 3D travel screen 61 shown in FIG. 4, the compartment lines 75 and the curbs 76 are displayed superimposed on the walls of the tunnel as the shape determining objects to determine the shape of the underwater tunnel as the shielded space. Here, as shown in FIG. 4, the compartment lines 75 have a U-shape along the internal shape of the curved walls 73 and are displayed on the curved walls 73 in a vertical direction with respect to the length direction (i.e., the travel direction of the vehicle) of the road. In addition, the compartment lines 75 are displayed at predetermined intervals along the length direction (i.e., the travel direction of the vehicle) of the road. On the other hand, as shown in FIG. 4, the curbs 76 are displayed along the border between the curved walls 73 and the road surfaces 74. The displayed shape determining objects determine the cross section shape (a semicircular shape in the example shown in FIG. 4) in a road width direction of the internal walls of the underwater tunnel.
Thereby, the user is able to clearly recognize the shape of the curved walls 73 by viewing the displayed compartment lines 75. The user is also able to clearly recognize the border (i.e., the shape of the road surfaces 74) between the curved walls 73 and the road surfaces 74 by viewing the displayed curbs 76. As a result, even if the urban tunnel has a complicated shape, it is possible to easily determine the space shape including the cross section shape of the underwater tunnel because of the compartment lines 75 and the curbs 76. In addition, it is possible to easily determine the road shape and the like ahead of the vehicle in relation to the travel direction.

In the navigation device 1 according to the present embodiment, if the travel speed of the vehicle is equal to or more than the predetermined speed (for example, the designated highest speed set to the road where the vehicle is located), the compartment lines 75 are displayed at shorter allocating intervals compared to if the travel speed of the vehicle is less than the predetermined speed, in the same manner as the lights 68 (for example, the allocating intervals are set to one half). Because of this configuration, if the vehicle travels at the predetermined speed or more, the number of compartment lines 75 disappearing from the screen per unit of time increases. Consequently, it is possible to make the user to strongly recognize that the vehicle is traveling at high speed, which makes it possible to suppress the vehicle traveling at the predetermined speed or more.

In addition, also in the 3D travel screen 61 shown in FIG. 4, for the facilities located within the display target area, the facility exterior appearance images 77 in 3DCG determining the exterior appearance shape of the facilities, are displayed. In addition, the details of the facility exterior appearance images 77 are the same as the already-explained facility exterior appearance images 70 that are displayed in the 3D travel screen 60 shown in FIG. 3. Therefore, the explanation is omitted.

Subsequently, an image display control processing program executed by the navigation ECU 13 in the navigation device 1 having the above-mentioned configuration is described with reference to FIG. 7. FIG. 7 is a flow chart of the image display control processing program according to the present embodiment. Here, the image display control processing program is a program that is repeatedly executed at predetermined intervals (for example, at intervals of 0.2 see.) after the ACC of the vehicle turned on. The image display control processing program is a program to display the travel guidance screen 50 (refer to FIG. 2) and the 3D travel screen 60 (refer to FIGS. 3 and 4) on the liquid crystal display 15. The program medicated by the flow chart in FIG. 7 is stored in the RAM 42 or the ROM 43 provided with the navigation device 1 and executed by the CPU 41.

First, at Step (hereinafter referred to as S) 1 in the image display control processing program, the CPU 41 acquires the current position and the bearing of the vehicle based on the detection result of the current position detection part 11. The CPU 41 also executes map matching processing that determines the position of the vehicle on the map image.

Next, at S2, the CPU 41 judges based on the current position of the vehicle acquired at S1 and the map information DB 31 whether the vehicle is traveling in the shielded space shielded by the shielding members and the shielded space is target, for display in the 3D travel screen (FIGS. 3 and 4), that is, whether the 3D drawing data 34 necessary to draw the 3D travel screen of the shielded space is stored in the map information DB 31. The extent to which the shielded space is shielded by the shielding members may be all around the traveling space, or partial (for example, only the upper side or only the lateral side). Specifically, the shielded space includes, for example, a tunnel (including a mountain tunnel, an urban tunnel, an underwater tunnel), a highway with sound isolating walls, a general road located under an elevated road, or the like.

If it has been judged that the vehicle is traveling in the shielded space shielded by the shielding members and the shielded space is target, for display in the 3D travel screen (S2: YES), the procedure proceeds to S4. On the other hand, if it has been judged that the vehicle is not traveling in the shielded space that is target for display in the 3D travel screen (S2: NO), the procedure proceeds to S3.

At S3, the CPU 41 displays the normal travel guidance screen 50 (refer to FIG. 2) on the liquid crystal display 15. In the travel guidance screen 50, in addition to the map image 51 of the vicinity of the current position of the vehicle as described above, the point information such as the host vehicle position mark 52 indicating the current position of the vehicle, the POI icons 55, and the like are displayed superimposed on the map image 51.

On the other hand, at S4, the CPU 41 judges whether the mode is set to "3D travel mode" in the navigation device 1. Here, in the navigation device 1 according to the present embodiment, the mode set in the navigation devices 1 can be switched between the "normal mode" and the "3D travel mode" based on the operation on the operation part 14.

If it has been judged that the mode is set to the "3D travel mode" in the navigation device 1 (S4: YES), the procedure proceeds to S5. On the other hand, if it has been judged that the mode is set to the "normal mode" in the navigation device 1 (S4: NO), the procedure proceeds to S3 and the CPU 41 displays the normal travel guidance screen 50 (refer to FIG. 2) on the liquid crystal display 15.

On the other hand, at S5, the CPU 41 calculates a movement amount of the vehicle from when the CPU 41 has executed drawing processing (S7) of the 3D travel screen in the program previously executed, based on the detection result of the vehicle speed sensor 22. If the CPU 41 has not executed the drawling processing of the 3D travel screen in the program, previously executed and the normal travel guidance screen has been displayed (S3), the movement amount of the vehicle calculated at S5 is 0.

Next, at S6, the CPU 41 acquires the 3D drawing data 34 necessary to display the 3D travel screen of the shielded space where the vehicle is currently from the map information DB 31.

Subsequently, at S7, the CPU 41 executes drawing of the frame of the 3D travel screen based on the movement amount of the vehicle acquired at S5 and the 3D drawing data 34 acquired at S6. Here, as already shown in FIGS. 3 and 4, the 3D travel screen is a screen in which the shielded space where the vehicle is currently traveling is displayed in a 3DCG image with a viewpoint from the inside of the shielded space. At S7, the processing to create 3DCG such as modeling, scene layout setting, rendering, and the like is executed. Also, the processing to paste a texture image on the created 3DCG mode is executed. The processing relating to the 3DCG is publicly known. Therefore, the detailed explanation is omitted.

In addition, at S7, if the travel speed of the vehicle is equal to or more than the predetermined speed (for example, the designated highest speed set to the road where the vehicle is traveling) as described above, the CPU 41 draws specific shape determining objects (for example, the lights 68 (refer to FIG. 3) and the compartment lines 75 (refer to FIG. 4)) at shorter allocating intervals compared to if the travel speed of the vehicle is less than the predetermined speed (for example, the allocating intervals are set to one half).

In addition, at S8. the CPU 41 displays the frame drawn at S7 on the liquid crystal display 15. As a result, the 3D travel screen corresponding to the current position and the bearing of the vehicle is displayed on the liquid crystal display 15 (refer to FIGS. 3 and 4).

As described in detail above, in the navigation device 1 according to the present embodiment, the movement guidance display method by the navigation device 1, and a computer program executed by the navigation device 1, if the vehicle is traveling in the shielded space shielded by the shielding members and the shielded space is target, for display in the 3D travel screen, the 3D travel screen 60, 61 in which the shielded space where the vehicle is currently traveling is displayed in a 3DCG image with a viewpoint, from the inside of the shielded space is displayed on the liquid crystal display 15. In addition, m the 3D travel screen 60, 61, the shape determining objects (for example, the lights 68, the curbs 69, the compartment lines 75, and the curbs 76) determining the shape of the shielded space is displayed superimposed on the shielding members. Therefore, if the vehicle is located in the shielded space, it is possible to make the user accurately recognize the space shape of the shielded space in the image displayed on the liquid crystal display 15. As a result, it is possible to make the user accurately determine the current position of the vehicle as well as easily recognize the vicinity environment (the road shape, the features in the vicinity, and the like) outside the shielded space, which cannot be viewed because of the shielding members.
In addition, when the vehicle is located especially in a tunnel as the shielded space, if` the 3D travel screen 60, 61 is displayed on the liquid crystal display 15, it is possible to make the user accurately recognize the space shape including the cross section of the tunnel in the image displayed on the liquid crystal display 15. As a result, it is possible to make the user accurately determine the current position of the vehicle as well as easily recognize the vicinity environment (the road shape, the features in the vicinity, and the like) outside the tunnel, which cannot be viewed because of the walls of the tunnel.
In addition, the lights 68 and the compartment lines 75 serving as the shape determining objects are displayed at predetermined intervals along the travel direction of the vehicle. Therefore, if the space shape of the shielded space has a complicated shape, it is possible to make the user accurately recognize the shape of the shielded space along the travel direction of the vehicle.
In addition, if the speed of the vehicle is equal to or more than the predetermined speed, the lights 68 and the compartment lines 75 serving as the shape determining objects are displayed at shorter allocating intervals compared to if the speed of the vehicle is less than the predetermined speed. Therefore, if the vehicle travels at the predetermined speed or more, the number of shape determining objects disappearing from the screen per unit of time increases. Consequently, it is possible to make the user strongly recognize that the vehicle is traveling at high speed, which can suppress the vehicle traveling at the predetermined speed or more. In addition, if the predetermined speed is set to the designated highest speed, it is possible to suppress the vehicle traveling at speed equal to or more than especially the designated highest speed set to the road.
In addition, the curbs 69, 76 are displayed as the shape determining objects. Therefore, it is possible to make the user easily recognize especially the shape of the road surface where the vehicle travels in the shielded space. Also, because the curbs exist a lot in the real world, it is possible to display the vicinity image, which does not give the user an uncomfortable feeling.
In addition, the lights 68 are displayed as the shape determining objects. Therefore, it is possible to make the user easily recognize especially the shape of the walls such as the ceilings, the sidewalls, and the like in the vicinity of the vehicle in the shielded space. Also, because the lighting fixtures exist a lot in the real world, it is possible to display the vicinity image, which does not give the user an uncomfortable feeling.
In addition, among the shape determining objects, the lights 68 and the compartment lines 75 are displayed in shape fitting the internal shape of the shielding members. Therefore, it is possible to make the user easily recognize the shape of the shielding members forming the shielded space. Consequently, if the shielding members have complicated shapes, it is possible to make the user recognize the shape of the shielded space without giving the user an uncomfortable feeling.
In addition, if the shielding members are displayed superimposed, the shielding members being located further with respect to the viewpoint are displayed at lower transmittance. Therefore, if the shielded space has a complicated shape, it is possible to display the positional relation of the shielding members in an easily-recognizable manner, which makes it possible to display the shape of the shielded space in an easily-determinable manner.
In addition, in the 3D travel screen 60, 61, the facility exterior appearance images 70, 77 that determine the exterior appearance shapes of the facilities located within the display target area are displayed at the display positions corresponding to the positional coordinates of the facilities. Therefore, even in the vicinity image displayed with a viewpoint from the inside of the shielded space, it is possible to make the user recognize what kinds of facilities are located in the vicinity area of the vehicle, which is shielded by the shielding members. The facility exterior appearance images 70, 77 showing facilities other than the specific facilities are not displayed or displayed at higher transmittance compared to the facility exterior appearance images 70, 77 showing the specific facilities. Therefore, even if a plurality of facilities exist, it is possible to make the user easily view facilities important, for the user, which makes it possible to facilitate the user accurately recognizing the position of the vehicle.

The present invention is not limited to the above-mentioned embodiment. Various improvements and/or variations may be made without departing from the broad spirit and scope of the underlying principles.
For example, in the present embodiment, the shielding members are exemplified by the ceilings and the sidewalls forming a tunnel for explanation. However, the shielding members may be sound isolating walls, elevated roads, woods, or the like. In addition, the shielded space shielded by the shielding members is exemplified by a tunnel. However, the shielded space may be a highway with sound isolating walls, a general road located under an elevated road, or the like. The extent to which the shielded space is shielded by the shielding members is not limited. For example, the space may be shielded only for one direction (a right direction in relation to the vehicle travel direction).

In the present embodiment, the shape determining objects to be displayed for assisting the user in determining the shielded space are exemplified by the lights 68, the compartment, lines 75, and the curbs 69, 76 for explanation. However, the shape determining objects may be other objects. For example, the shape determining objects may be, for example, windows, indications on road surface such as white lines, street lamps, bridge piers, center dividers, and the like. In addition, in the present embodiment, it is described that the lights 68 have a L-shape. However, the lights 68 may have a circular shape or a rectangular shape.

In addition, in the present embodiment, if the speed of the vehicle becomes equal to or more than the designated highest speed set to the road, the allocating intervals of the shape determining objects are set shorter. However, the allocating intervals of the shape determining objects may be set shorter if the speed becomes equal to or more than a predetermined rate (for example, 80%) of the designated highest speed.

In addition, the present intention may be applied to devices having display units such as a display or the like, besides the navigation devices. For example, the present intention may be applied to portable terminals such as cellular phones, PDAs, and the like, personal computers, portable music players, and the like (hereinafter referred to as "portable terminals or the like"). In addition, the present invention may be applied to systems composed of serves and portable terminals or the like. In such case, the above-mentioiled image display control processing program (the respective steps in FIG. 7) may be executed either a server or a portable terminal or the like. In addition, if the present intention is applied to the portable terminals or the like, travel guidance for movable bodies other than vehicle, for example, users of portable terminal or the like, two wheels, and the like may be performed.

While various features have been described in conjunction with the examples outlined above, various alternatives, modifications, variations, and/or improvements of those features and/or may be possible. Accordingly, the examples, as set forth above, are intended to be illustrative.

## Claims

1. A movement, guidance display system (1) comprising:
an image display unit (13) that, if a movable body (63) is located in a shielded space (62) shielded by shielding members (65, 66, 73), displays on a display device (15) a vicinity image showing a vicinity environment outside the shielded space by translucently displaying the shielding members with a viewpoint from inside of the shielded space; and
a shape determining object display unit (13) that displays shape determining objects (68, 69, 75, 76) determining a shape of the shielded space by superimposing on the shielding members in the vicinity image.

2. The movement guidance display system (1) according to claim 1, wherein the image display unit (13), if the movable body (63) is located on a road inside a tunnel, displays on the display device (15) the vicinity image showing a vicinity environment outside the tunnel by translucently displaying walls of the tunnel serving as the shielding members (65, 66, 73) with a viewpoint from the road inside the tunnel, and
the shape determining object display unit (13) displays the shape determining objects (68, 69, 75, 76) determining a cross-section shape of internal walls of the tunnel in a width direction of the road by superimposing on the walls of the tunnel in the vicinity image.

3. The movement guidance display system (1) according to claim 1 or 2,
wherein
the shape determining object display unit (13) displays lighting fixtures (68) as the shape determining objects.

4. The movement guidance display system (1) according to claim 3, wherein
the shape determining object display unit (13) displays the lighting fixtures (68) of a shape fitting to an internal shape of the shielding members.

5. The movement guidance display system (1) according to any one of claims 1 to 4, wherein
the shape determining object display unit (13) displays the shape determining objects (68, 75) at predetermined intervals along a moving direction of the movable body (63).

6. The movement guidance display system (1) according to claim 5, comprising a movable body speed acquiring unit (13) that acquires a moving speed of the movable body (63), wherein
the shape determining object display unit (13), if the moving speed of the movable body is equal to or more than a predetermined speed, displays the shape determining objects (68, 75) at shorter allocating intervals compared to if the moving speed of the movable body is less than the predetermined speed.

7. The movement guidance display system (1) according to claim 6, comprising a designated highest speed acquiring unit (13) that acquires a designated highest speed set to a road where the movable body (63) is located, wherein
the predetermined speed is the designated highest speed acquired by the designated highest speed acquiring unit.

8. The movement guidance display system (1) according to any one of claims 1 to 7, therein
the shape determining object display unit (13) displays curbs (69, 76) as the shape determining objects.

9. The movement guidance display system (1) according to any one of claims 1 to 8. wherein
the image display unit (13), if the shielding members (65, 66, 73) are displayed superimposed, displays the shielding members being located further with respect to the viewpoint at lower transmittance.

10. The movement guidance display system (1) according to any one of claims 1 to 9, comprising:
a facility information acquiring unit (13) that acquires facility information regarding a facility; and
a facility display unit (13) that displays a facility exterior appearance image (70, 77) determining an exterior shape of the facility, which is located within a display target area in the vicinity image, at a display position corresponding to a positional coordinate of the facility based on the facility information acquired by the facility information acquiring unit, wherein
the facility display unit does not display the facility exterior appearance image showing a facility other than specific facilities or displays the facility exterior appearance image showing the facility other than the specific facilities at higher transmittance compared to the facility exterior appearance images showing the specific facilities.

11. A movement guidance display method (1) comprising the steps of
displaying, if a movable body (63) is located in a shielded space (62) shielded by shielding members (65, 66, 73), on a display device (15) a vicinity image showing a vicinity environment outside the shielded space by translucently displaying the shielding members with a viewpoint from inside of the shielded space; and
displaying shape determining objects (68, 69, 75, 76) determining a shape of the shielded space by superimposing on the shielding members in the vicinity image.

12. A computer program installed in a computer, the computer program causing a processor (41) to execute the functions of:
displaying, if a movable body (63) is located in a shielded space (62) shielded by shielding members (65, 66, 73), on a display device (15) a vicinity image showing a vicinity environment outside the shielded space by translucently displaying the shielding members with a viewpoint from inside of the shielded space; and
displaying shape determining objects (68, 69, 75, 76) determining a shape of the shielded space by superimposing on the shielding members in the vicinity image.
